Europäisches Patentamt

**European Patent Office**

Office européen des brevets

(11) Numéro de publication: **0 083 101**
**B1**

(12) **FASCICULE DE BREVET EUROPEEN**

(45) Date de publication du fascicule du brevet: **07.12.88**

(51) Int. Cl.⁴: **G 02 B 6/44**

(21) Numéro de dépôt: **82112050.8**

(22) Date de dépôt: **28.12.82**

(54) Dispositif de jonction des extrémités de deux câbles sous-marins à fibres optiques, et son procédé de fabrication.

(30) Priorité: **30.12.81 FR 8124514**

(43) Date de publication de la demande:
**06.07.83 Bulletin 83/27**

(45) Mention de la délivrance du brevet:
**07.12.88 Bulletin 88/49**

(84) Etats contractants désignés:
**DE FR GB IT**

(56) Documents cités:
**EP-A-0 066 829**
**DE-A-3 006 131**
**FR-A-2 401 434**
**FR-A-2 431 713**
**FR-A-2 438 277**
**GB-A-1 580 061**
**GB-A-2 074 753**
**US-A-4 107 451**
**US-A-4 278 835**

(73) Titulaire: **LES CABLES DE LYON Société anonyme dite:**
**170 quai de Clichy**
**F-92111 Clichy Cedex (FR)**

(72) Inventeur: **Guazzo, Lucien**
**77, rue de la Paix**
**F-62100 Calais (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne un dispositif de jonction des extrémités de deux câbles sous-marins à fibres optiques, comprenant chacun un coeur optique sur lequel vient s'enrouler hélicoïdalement une voûte de fils d'acier, un tube de cuivre rétreint sur la voûte, une gaine isolante externe, dispositif comprenant deux parties latérales possédant chacune:

b1) une pièce d'ancrage au moins en partie en métal de résistance mécanique élevée percée du côté tourné vers la partie centrale d'un alésage conique pour le passage et le logement des extrémités des fils d'acier formant voûte, et du côté opposé d'un alésage cylindrique pour le logement du tube de cuivre, et filetée sur une partie de sa surface externe de manière à se fixer dans le taraudage d'une extrémité d'un tube conteneur,

b2) une bague conique d'épanouissement et de maintien des fils d'acier formant voûte percée d'un canal axial pour le passage du coeur optique,

b3) un remplissage en résine synthétique durcissable occupant le volume libre entre la surface interne de la pièce d'ancrage et la surface externe de la bague conique, autour des extrémités des fils d'acier formant voûte.

Elle concerne aussi un procédé de fabrication d'un tel dispositif consistant en ce que:

a) on élimine dans la zone de jonction sur une longueur notablement supérieure à celle désirée pour ledit dispositif, le coeur optique les fils d'acier formant voûte, le tube de cuivre rétreint, la gaine externe, en laissant à nu les fibres optiques,

b) on engage successivement sur les extrémités du câble, des manchons extérieurs, le tube conteneur préalablement enrobé, et les pièces d'ancrage,

c) on coupe les fils d'acier formant voûte, le tube de cuivre rétreint, la gaine externe, à la longueur nécessaire à celle désirée par le dispositif,

d) on introduit dans l'alésage conique des pièces d'ancrage, une certaine quantité de résine synthétique durcissable et on épanouit les extré-mites des fils d'acier formant voûte à l'intérieur de ladite partie conique,

e) on introduit les pièces coniques d'épanouissement des fils d'acier de la voûte à l'intérieur des pièces d'ancrage, on réalise le remplissage de la totalité du volume compris entre les pièces d'ancrage les extrémités des fils d'acier et les pièce coniques d'épanouissement avec la résine synthétique puis on fait durcir la résine.

Cette jonction peut correspondre à la nécessité de réunir deux extrémités de câbles au cours de la pose d'une ligne de transmission sous-marine, on bien à celle d'effectuer une réparation en un point où un câble a été endommagé.

Les câbles sous-marins à fibres optiques comportent généralement, une âme comprenant les fibres optiques (placées dans des tubes de matériau plastique remplis de matière visqueuse ou dans des sillons hélicoïdaux sur le pourtour d'un jonc métallique ou en matière plastique), une voûte formée de fils d'acier enroulés en hélice et recouverte d'un tube de métal conducteur ductile (cuivre ou aluminium) soudé longitudinalement, rétrient sur la voûte de fils d'acier et assurant la transmission des courants d'alimentation des répéteurs, une gaine isolante en matière thermoplastique, telle que le polyéthylène.

La raccordement de deux extrémités de câbles ainsi constitués est difficile, car il faut à la fois

souder ou coller bout à bout les fibres optiques des deux câbles, en laissant une surlongueur suffisante pour éviter la rupture des fibres sous l'effet d'une traction longitudinale

assurer la continuité mécanique des voûtes porteuses des deux câbles à travers la jonction, en supportant l'effort de traction subi par le câble lors de manipulations

assurer l'étanchéité de la jonction à l'eau, même dans le cas des pressions élevées régnant dans les fonds sous-marins.

Selon une suggestion faite antérieurement, il a déjà été proposé un tel dispositif permettant de rationaliser et d'accélérer les opérations de jonction de deux extrémités de tel câbles. Ce dispositif de jonction montre un mandrin porte-fibres libre en translation et en rotation. Ceci peut donc occasionner une rupture de fibres en cas de fausse manoeuvre l'opérateur.

La présente invention a pour but de remédier à ces inconvénients et de procurer un dispositif et un procédé de jonction simple qui assure à celle-ci, une bonne résistance mécanique, une bonne étanchéité par remplissage de l'espace intérieur où sont raccordées les fibres à l'aide d'un liquide hydrophobe, une bonne isolation électrique par des gaines en matière thermoplastique.

Le dispositif est caractérisé en ce que la partie centrale possède:

un mandrin creux et muni d'orifices latéraux pour le passage des fibres optiques de l'interieur du mandrin vers l'extérieur, autour duquel sont enroulées les extrémités des fibres optiques, soudées on raccordées individuellement l'une à l'autre, ledit mandrin étant bloqué en translation et également en rotation suivant l'axe principal du dispositif,

un tube conteneur en métal de résistance mécanique élevée, et préalablement enrobé d'une gaine en matière thermoplastique isolante, le tube entourant avec jeu le mandrin, et étant vissé à ses deux extrémités aux pièces d'ancrage et en ce qu'on prevoit puis en chaque partie latérale:

un moulage de fermeture en matière thermoplastique qui assure la liaison entre la gaine isolante du câble et la gaine isolante du tube.

Avantageusement le mandrin est bloqué en translation suivant l'axe principal par les deux pièces d'ancrage et bloqué en rotation par une goupille.

Selon une autre caractéristique avantageuse le mandrin et l'espace libre entre lui-même et le tube conteneur sont remplis d'un produit visqueux tel que du polyisobutylène.

De préférence les pièces d'ancrage sont munies d'orifices permettant le remplissage avec le polyisobutylène, l'une est munie d'un orifice pour le passage du polyisobutylène et l'autre est munie d'un orifice pour permettre une mise à l'air libre.

Selon une forme de réalisation la bague conique d'épanouissement présente une biconicité pour assurer un meilleur coincement. Dans ce cas une bague en cuivre resserre, après la bague conique à double conicité, la voûte en fil d'acier sur le coeur optique.

Il comporte en outre, deux manchons extérieurs en matière synthétique connus par une suggestion faite antérieurement.

Le procédé de fabrication d'un tel dispositif de jonction est caractérisé en ce que, après avoir introduit le tube conteneur en même temps que les manchons extérieurs et les pièces d'ancrages,

f) on passe les fibres optiques à souder au travers d'un mandrin creux et de ses orifices latéraux, et on met en place le mandrin entre les pièces d'ancrage bloquant ledit mandrin en rotation et en translation suivant l'axe principal,

g) on soude les fibres optiques à raccorder et on enroule le surplus de longueur autour du mandrin,

h) on ramène le tube conteneur autour de la partie centrale et on le visse aux deux pièces d'ancrage,

i) après un remplissage de l'intérieur du tube conteneur par un porduit visqueux et après une fermeture à l'aide de bouchons de l'orifice de remplissage et de l'orifice de mise à l'air libre percés dans les pièces d'ancrage, on réalise deux moulages de fermeture en matière thermoplastique qui assure la liaison avec la gaire isolante de câble.

De préférence le produit visqueux est du polyisobutylène et les bouchons sont filetés.

De préférence, après avoir réalisé les deux moulages de fermeture, on recouvre l'ensemble par deux manchons extérieurs en matière synthétique.

Il est décrit ci-après, à titre d'exemple et en référence aux figures du dessin annexé, un dispositif de jonction selon l'invention dans lequel chaque câble comprend un conducteur de retour recouvert par une gaine de protection, et son procédé de fabrication.

La figure 1 représente en coupe partielle, l'ensemble du dispositif une fois la jonction terminée.

La figure 2 représente, en élévation, une extrémité d'un câble avec ses différents composants.

La figure 3 représente en coupe partielle, une vue agrandie de la figure 1, où figurent les pièces principales de la jonction.

La figure 3A représente en coupe axiale, et en échelle agrandie, la partie du dispositif située à gauche de l'axe XX de la figure 3.

La figure 3B représente en coupe axiale, et en échelle agrandie la partie du dispositif située à droite de l'axe XX de la figure 3.

La figure 4 montre en variante une bague 11 présentant une biconicité.

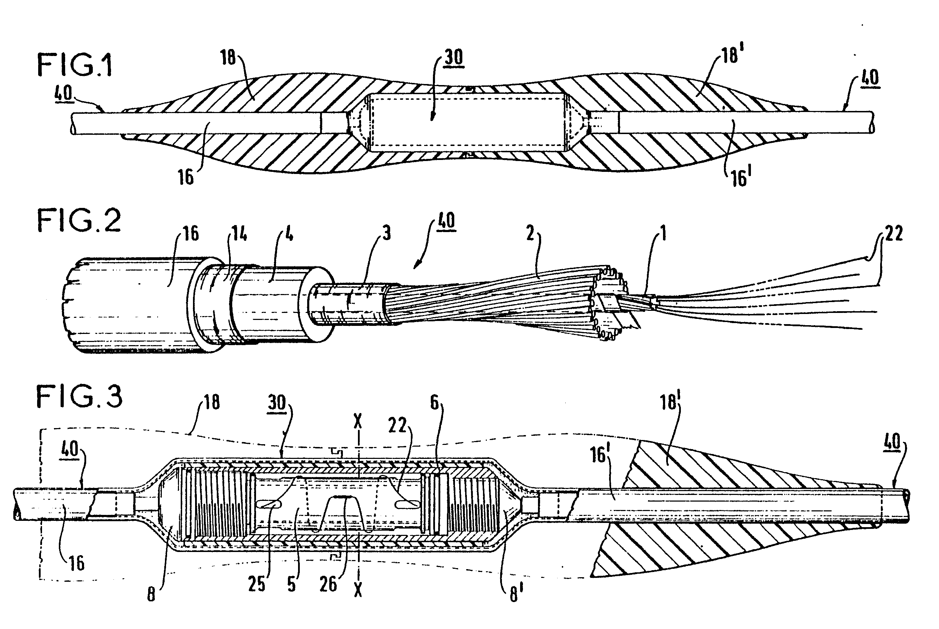

Dans la figure 1, on voit deux manchons extérieurs 18, 18' recouvrant totalement un dispositif de jonction 30.

La figure 2 montre une extrémité d'un câble 40 composé de fibres optiques 22 d'un coeur optique 1, d'une voûte de fils d'acier 2, d'un tube en cuivre 3 assurant la transmission des courants d'alimentation des répéteurs, d'une gaine isolante 4, d'un conducteur de retour 14, et d'une autre gaine isolante 16.

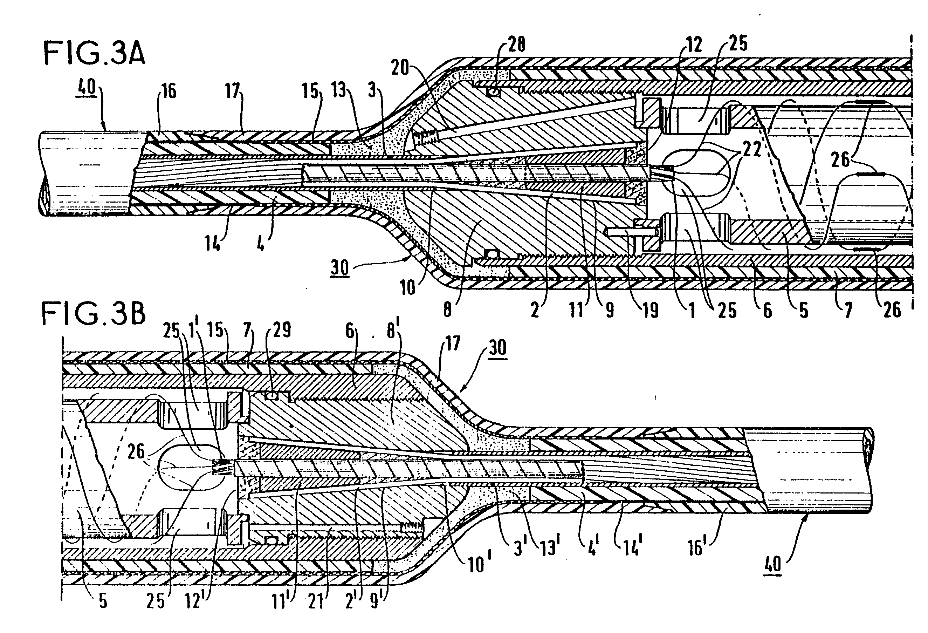

La figure 3 montre l'agencement intérieur du dispositif 30, en particulier l'enroulement d'une fibre 22 sur un mandrin 5 et un manchon 26 protégeant la soudure.

Comme le montrent les figures 3A et 3B, le dispositif de jonction comporte le mandrin axial 5 percé en son milieu qui possède huit orifices latéraux 25 permettant le passage des fibres optiques et leurs enroulements sur ledit mandrin. Elles sont ensuite soudées en bout l'une de l'autre et protégées par le manchon 26.

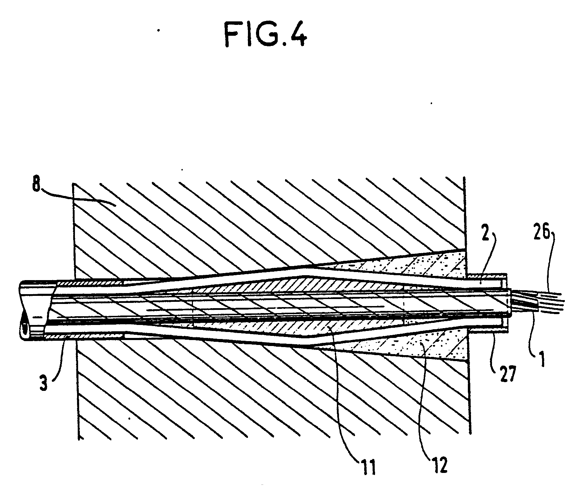

Le mandrin est bloqué en rotation par une goupille 19 et en translation par deux pièces d'ancrage 8, 8'. Ces dites pièces d'ancrage sont percées en leurs milieux d'un alésage conique 9, 9', côté mandrin, et d'un alésage cylindrique 10, 10' côté extérieur pour recevoir le tube 3, 3' en cuivre. La voûte 2, 2', en fils d'acier s'épanouit dans l'alésage conique 9, 9' à l'aide d'une bague conique 11, 11'. Cette bague peut présenter une biconicité comme le montre la figure 4 pour accentuer la résistance au glissement. Il faut alors une bague en cuivre 27, pour resserrer la voûte de fils d'aciers sur le coeur optique. On notera que les pièces d'ancrage 8, 8' ne sont pas symétriques, pour des questions de facilité de montage qui apparaîtront plus loin.

L'espace resté libre entre les pièces d'ancrage, les bagues coniques et la voûte, est rempli d'une résine époxyde 12, 12' durcie à chaud, qui évite tout glissement de la voûte après sa mise en place. Les pièces d'ancrage sont filitées sur la majeure partie de leur surface externe, et vissées sur des taraudages internes des extrémités d'un tube conteneur 6. Celui-ci n'est pas symétrique pour des raisons de facilité de montage, car il vient d'abord recouvrir, la pièce d'ancrage 8' et ensuite, se visser en même temps sur les deux pièces d'ancrage 8, 8'.

La pièce d'ancrage 8 possède un orifice 20 servant au remplissage du mandrin par un produit visqueux, tel que le polyisobutylène. La pièce d'ancrage 8' possède un orifice 21 servant à laisser échapper l'air pendant le remplissage. Une fois ledit remplissage terminé, ces deux orifices sont fermés par deux bouchons filetés. Des joints toriques 28, 29 assurent l'étanchéité entre le tube conteneur et les pièces d'ancrage pour éviter une fuite du produit visqueux mais aussi pour empêcher une éventuelle rentrée d'eau.

La continuité de la gaine isolante 4, 4' du câble et d'une gaine isolante 7 du tube est réalisée par un moulage de fermeture 13, 13' en matière thermoplastique. Le conducteur de retour 14, 14' en aluminium constitue une mise à la terre servant à protéger l'opérateur, et sert également au retour des courants d'alimentation des répéteurs.

La reconstitution de ce conducteur est assurée par une tresse 15 en aluminium, fixée par soudure ou collage.

Les deux gaines 16, 16' en matière thermoplastique sont raccordées par une gaine 17 thermorétractable;

Deux manchons 18, 18' en matière synthétique recouvrent l'ensemble du dispositif. Ils sont fixés l'un à l'autre par collage.

La fabrication du dispositif qui vient d'être décrit s'effectue comme suit:

On élimine dans la zone de jonction sur une longueur supérieure à celle désirée par ledit dispositif, le coeur optique 1, 1', les fils d'acier formant voûte 2, 2', le tube de cuivre rétrient 3, 3', la gaine 4, 4', le conducteur de retour 14, 14', la gaine de protection 16, 16', au même niveau en laissant à nu les fibres optiques 22.

On engage successivement, sur chaque extrémité du câble, les manchons extérieurs 18, 18', sur un côté, la gaine thermorétractable 17, la tresse en aluminium 15, le tube conteneur 6 et de nouveau sur chaque extrémité, les pièces d'ancrage 8, 8'.

On coupe de nouveau les fils d'acier formant voûte 2, 2', des extrémités des câbles sur une longueur permettant de dégager le coeur optique 1, 1'. On coupe ensuite le tube de cuivre 3, 3' un peu plus loin que la voûte 2, 2', en fonction de la longueur des pièces d'ancrage; puis successivement sur une longueur de plus en plus longue, la gaine 4, 4', le conducteur de retour 14, 14' et sa gaine de protection 16, 16'.

On épanouit alors les fils d'acier 2, 2' à l'intérieur des alésages coniques 9, 9 des pièces d'ancrage 8, 8' après avoir rempli ces derniers d'un peu de résine époxyde chaude; on introduit les bagues coniques 11, 11' d'épanouissement entre les fils d'acier, les coeurs optiques 1, 1' passant à travers les canaux centraux des deux bagues. On finit de remplier de résine époxyde l'espace compris entre les pièces d'ancrage, les fils et les bagues de maintien, puis on chauffe l'ensemble par l'extérieur pour polymériser et durcir la résine puis bloquer les fils d'acier à l'intérieur des pièces d'ancrage.

On passe les fibres optiques dans les orifices latéraux 25 du mandrin 5 puis celui-ci est mis en place entre les pièces d'ancrage 8, 8'. On soude les fibres optiques deux à deux et on les enroule autour du mandrin, chaque soudure est protégée par un manchon 26.

On ramène le tube conteneur 6 et on le visse aux deux pièces d'ancrage, ce tube pouvant être éventuellement bloqué en rotation par une vis, pour éviter un dévissage. On procéde maintenant au remplissage du mandrin avec un produit visqueux, tel que du polyisobutylène. Une fois le remplissage terminé, on ferme les orifices 20, 21 par des bouchons filetés.

On réalise ensuite le moulage de fermeture 13, 13'. Ces moulages assurent la laison entre la gaine isolante 4, 4' du câble et la gaine isolante 7 du tube conteneur.

On procède à la reconstitution du conducteur de retour 14, en replaçant la tresse 15 au niveau de la jonction. On met en place également le manchon rétractable 17 et on relie les deux gaines de protection 16, 16' par ce manchon 17, qui va se rétracter par chauffage.

Pour teminer la jonction, il reste à recouvrir l'ensemble avec les deux manchons extérieurs 18, 18' qui seront collés l'un à l'autre.

**Revendications**

1. Dispositif de jonction des extrémités de deux câbles sous-marins à fibres optiques, comprenant chacun un coeur optique (1, 1') sur lequel vient s'enrouler hélicoïdalement une voûte de fils d'acier (2, 2'), un tube du cuivre (3, 3') rétreint sur la voûte, une gaine isolante externe (4, 4'), dispositif comprenant deux parties latérales possédant chacune:

une pièce d'ancrage (8, 8') au moins en partie en métal de résistance mécanique élevée, percée du côté tourné vers la partie centrale d'un alésage conique (9, 9') pour le passage et le logement des extrémités des fils d'acier formant voûte, et du côté opposé d'un alésage cylindrique (10, 10') pour le logement du tube de cuivre, et filetée sur une partie de sa surface externe de manière à se fixer dans le taraudage d'une extrémité d'un tube conteneur (6),

une bague conique (11, 11') d'épanouissement et de maintien des fils d'acier formant voûte, percée d'un canal axial pour le passage du coeur optique,

un remplissage en résine synthétique durcissable (12, 12') occupant le volume libre entre la surface interne de la pièce d'ancrage et la surface externe de la bague conique, autour des extrémités des fils d'acier formant voûte,
caractérisé en ce que la partie centrale possède:

un mandrin (5) creux et muni d'orifices latéraux (25) pour le passage des fibres optiques de l'intérieur du mandrin vers l'extérieur, autour duquel sont enroulées les extrémités des fibres optiques, soudées ou raccordées individuellement l'une à l'autre, ledit mandrin étant bloqué en translation et également en rotation suivant l'axe principal du dispositif,

un tube conteneur (6) en métal de résistance mécanique élevée, et préalablement enrobé d'une gaine (7) en matière thermoplastique isolante, le tube entourant avec jeu le mandrin (5), et étant vissé à ses deux extrémités aux pièces d'ancrage,
et en ce qu'on prevoit en chaque partie latérale:

un moulage de fermeture (13, 13') en matière thermoplastique, qui assure la liaison entre la gaine isolante du câble (4, 4') et la gaine isolante du tube (7).

2. Dispositif selon la revendication 1, caractérisé en ce que le mandrin est bloqué en translation suivant l'axe principal par les deux pièces d'ancrage (8, 8').

3. Dispositif selon la revendication 1, caractérisé en ce que le mandrin est bloqué en rotation par une goupille (19).

4. Dispositif selon la revendication 1, caractérisé en ce que le mandrin et l'espace libre entre lui-même et le tube conteneur sont remplis d'un produit visqueux, de préférence du polyisobutylène.

5. Dispositif selon la revendication 4, caractérisé en ce que les pièces d'ancrage sont munies d'orifices permettant le remplissage avec le polyisobutylène; l'une des pièces d'ancrage (8) étant munie d'un orifice (20) pour le passage du polyisobutylène et l'autre pièce d'ancrage (8') munie d'un orifice (21) pour permettre une mise à l'air libre.

6. Dispositif selon la revendication 1, caractérisé en ce que la bague conique (11, 11') d'épanouissement présente une biconicité pour assurer un meilleur coincement.

7. Dispositif selon la revendication 6, caractérisé en ce qu'une bague en cuivre (27) resserre, après la bague conique à double conicité, la voûte (2) en fil d'acier sur le coeur optique (1).

8. Dispositif selon la revendication 1, dans lequel chaque câble comprend un conducteur de retour caractérisé en ce que ledit dispositif comprend une tresse (15) en aluminium assurant le raccordement des conducteurs de retour (14, 14').

9. Dispositif selon la revendication 1, dans lequel chaque câble comprend un conducteur de retour recouvert par une gaine de protection, caractérisé en ce que ledit dispositif comprend un manchon thermo-rétractable (17) assurant le raccordement des gaines de protection (16, 16').

10. Dispositif selon la revendication 1, caractérisé en ce qu'il comprend deux manchons extérieurs (18, 18') en matière synthétique.

11. Procédé de fabrication d'un dispositif de jonction selon la revendication 1, consistant en ce que

a) on élimine dans la zone de jonction sur une longueur notablement supérieure à celle désirée pour ledit dispositif, le coeur optique (1, 1'), les fils d'acier formant voûte (2, 2'), le tube de cuivre rétrient (3, 3') la gaine externe (4, 4'), en laissant à nu les fibres optiques (22),

b) on engage successivement sur les extrémités du câble, des manchons extérieurs (18, 18'), et les pièces d'ancrage (8, 8') percées d'un alésage conique (9, 9'),

c) on coupe les fils d'acier formant voûte (2, 2'), le tube de cuivre (3, 3') rétrient, la gaine externe (4, 4') à la longueur nécessaire à celle désirée pour le dispositif,

d) on introduit dans l'alésage conique (9, 9') des pièces d'ancrage, une certaine quantité de résine synthétique durcissable et on épanouit les extrémités des fils d'acier formant voûte à l'intérieure dudit alésage conique,

e) on introduit des pièces coniques d'épanouissement des fils d'acier de la voûte à l'intérieur des pièces d'ancrage, on réalise le remplissage (12) de la totalité du volume compris entre les pièces d'ancrage, les extrémités des fils d'acier et les pièces coniques d'épanouissement avec la résine synthétique puis on fait durcir la résine, procédé caractérisé en ce que, après avoir introduit le tube conteneur (6) en même temps que les manchons extérieurs et les pièces d'ancrage,

f) on passe les fibre optiques à souder au travers d'un mandrin (5) creux et de ses orifices latéraux (25) et on met en place le mandrin entre les pièces d'ancrage bloquant ledit mandrin en rotation et en translation suivant l'axe principal,

g; on soude les fibres optiques à raccorder et on enroule le surplus de longueur autour du mandrin,

h) on ramène le tube conteneur autour de la partie centrale et on le visse aux deux pièces d'ancrage,

i) après un remplissage de l'intérieur du tube conteneur par un produit visqueux et après une fermeture à l'aide de bouchons d'un orifice de remplissage (20) et d'un orifice de mise à l'air libre (21) percés dans les pièces d'ancrage (8, 8'), on réalise deux moulages de fermeture (13, 13') en matière thermoplastique qui assure le liaison avec la gaine isolante du câble.

12. Procédé de fabrication d'un dispositif de jonction selon la revendication 11, caractérisé en ce que ledit produit visqueux, est du polyisobutylène.

13. Procédé de fabrication d'un dispositif de jonction selon les revendications 11 ou 12, caractérisé en ce que lesdits bouchons sout filetés.

14. Procédé de fabrication d'un dispositif de jonction selon l'une des revendications 11 à 13, dans lequel chaque câble comprend un conducteur de retour, caractérisé en ce que l'on raccorde les conducteurs de retour (14, 14') à l'acide d'une tresse (15).

15. Procédé de fabrication d'un dispositif de jonction selon la revendication 14, dans lequel le conducteur de retour est recouvert par une gaine de protection, caractérisé en ce que l'on raccorde les deux gaines de protection (16, 16') à l'acide d'un manchon rétractable (17).

16. Procédé de fabrication d'un dispositif de jonction selon l'une des revendications 11 à 15, caractérisé en ce que l'on recouvre l'ensemble par deux manchons extérieurs (18, 18') en matière synthétique.

**Patentansprüche**

1. Vorrichtung zum Verbinden der Enden zweier Unterwasserkabel mit optischen Fasern, mit jeweils einer optischen Seele (1, 1'), um die sich spiralig eine Bewehrung aus Stahldrähten (2, 2') legt, mit einem auf die Bewehrung aufgeschrumpften Kupferrohr (3, 3') und mit einer äußeren Isolierhülle (4, 4'), wobei die Vorrichtung zwei Anschlußteile aufweist mit jeweils:

einem Verankerungskörper (8, 8'), der zumindest teilweise aus einem Metall hoher mechanischer Festigkeit besteht und an der zum Mittelabschnitt hin gerichteten Seite eine konische Bohrung (9, 9') zur Durchführung und Aufnahme der Enden der die Bewehrung bildenden Stahldrähte und an der entgegengesetzten Seite eine zylindrische Bohrung (10, 10') zur Aufnahgme des Kupferrohrs besitzt und über einen Teil seiner äußeren Oberfläche mit einem Gewinde versehen ist, mit dem er sich im Innengewinde eines Endes eines Büchsenrohres (6) fixiert;

einen konischen Ring (11, 11') zur Spreizung und Halterung der die Bewehrung bildenden Stahldrähte, welcher einen axialen Kanal zur Durchleitung der optischen Seele aufweist;

einer Füllung aus härtbarem synthetischen Harz (12, 12'), welche den freien Raum zwischen der inneren Oberfläche des Verankerungskörpers und der äußeren Oberfläche des konischen Rings um die Enden der die Bewehrung bildenden Stahldrähte ausfüllt;

dadurch gekennzeichnet, daß der Mittelabschnitt umfaßt:

eine hohle Hülse (5), welche mit seitlichen Öffnungen (25) zur Durchleitung der optischen Fasern vom Inneren der Hülse nach außen versehen ist und um das die Enden der optischen Fasern, jeweils miteinander verschweißt oder verbunden, herumgewickelt sind, wobei die Hülse gegen Verschiebung und Drehung entsprechend der Hauptachse der Vorrichtung gesichert ist, und

einen Umfassungsrohr (6) aus Metall hoher mechanischer Festigkeit, welches zuvor mit einer Hülle (7) aus isolierendem thermoplastischen Material umkleidet wurde, wobei das Rohr die Hülse (5) mit Spiel umschließt und mit seinen beiden Enden mit den Verankerungskörpern verschraubt ist;

und daß in jedem Anschlußteil ein Verschluß (13, 13') aus thermoplastischem gegossenem Material angebracht ist, welcher die Verbindung zwischen der Isolierhülle (4, 4') des Kabels und der Isolierhülle des Rohres (7) herstellt.

2. Vorrichtung nach Anspruch 1, dadurch gekennzeichnet, daß die Hülse gegen Verschiebung in Richtung der Hauptachse durch die beiden Verankerungskörper (8, 8') gesichert ist.

3. Vorrichtung nach Anspruch 1, dadurch gekennzeichnet, daß die Hülse gegen Drehung durch eine Stift (19) gesichert ist.

4. Vorrichtung nach Anspruch 1, dadurch gekennzeichnet, daß die Hülse und der zwischen ihr und dem Umfassungsrohr befindliche freie Raum mit einem viskosen Produkt, vorzugsweise mit Polyisobutylen, ausgefüllt sind.

5. Vorrichtung nach Anspruch 4, dadurch gekennzeichnet, daß die Verankerungskörper mit Öffnungen zur Verfüllung mit Polyisobutylen versehen sind, wobei einer der Verankerungskörper (8) eine Öffnung (20) zur Durchleitung des Polyisobutylens, und der andere Verankerungskörper (8') eine Öffnung (20') zur Entlüftung aufweist.

6. Vorrichtung nach Anspruch 1, dadurch gekennzeichnet, daß der konische Speizring (11, 11') zur Verbesserung der Klemmwirkung doppelkonisch ausgebildet ist.

7. Vorrichtung nach Anspruch 6, dadurch gekennzeichnet, daß der Kupferring (27) hinter dem doppelkonischen Spreizring die Bewehrung (2) aus Stahldrähten auf der optischen Seele (1) festspannt.

8. Vorrichtung nach Anspruch 1, bei der jedes Kabel einen Rückleiter aufweist, dadurch gekennzeichnet, daß die Vorrichtung ein Litzenband (15) aus Aluminium aufweist, welches die Verbindung zwischen den Rückleitern (14, 14') herstellt.

9. Vorrichtung nach Anspruch 1, bei der jedes Kabel einen Rückleiter aufweist, der mit einer Schutzhülle umgeben ist, dadurch gekennzeichnet, daß die Vorrichtung eine durch Wärme schrumpffähige Hülse (17) aufweist, welche die Verbindung zwischen den Schutzhüllen (16, 16') herstellt.

10. Vorrichtung nach Anspruch 1, dadurch gekennzeichnet, daß sie zwei äußere Manschetten (18, 18') aus synthetischem Material aufweist.

11. Verfahren zur Herstellung der Verbindungsvorrichtung nach Anspruch 1, bei dem man:

a) in der Verbindungszone über eine Länge, die wesentlich größer als die für die Vorrichtung benötigte Länge ist, die optische Seele (1, 1'), die Stahldrähte der Bewehrung (2, 2'), das aufgeschrumpfte Kupferrohr (3, 3') und die äußere Hülle (4, 4') entfernt, wobei die optischen Fasern (22) blank bleiben;

b) nacheinander die äußern Manschetten (18, 18') und die von einer Konischen Bohrung (9, 9') durchsetzten Verankerungskörper (8, 8') auf die Kabelenden fädelt,

c) die die Bewehrung (2, 2') bildenden Stahldrähte, das aufgeschrumpfte Kupferrohr (3, 3') und die äußere Hülle (4, 4') auf die für die Vorrichtung benötigte Länge abschneidet,

d) in die konische Bohrung (9, 9') der Verankerungskörper eine gewisse Menge härtbaren synthetischen Harzes eingibt und die Enden der die Bewehrung bildenden Stahldrähte in der konischen Bohrung aufspreizt;

e) die konischen Spreizelemente für die die Bewehrung bildenden Stahldrähte in das Innere der Vernakerungskörper einführt und das gesamte Volumens zwischen den Verankerungskörpern, den Stahldrahtenden und den konischen Spreizelementen mit synthetischem Harz (12) füllt, und dann das Harz aushärtet, dadurch gekennzeichnet, daß man nach Einfügung des Umfassungsrohres (6) zusammen mit den äußeren Manschetten und den Verankerungskörpern:

f) die zu verschweißenden optischen Fasern durch eine hohle Hülse (5) und ihre seitlichen Öffnungen (25) führt und die Hülse zwischen die beiden Verankerungskörper bringt, und die Hülse gegen Drehung und Verschiebung in Richtung der Hauptachse sichert,

g) die zu verbindenden optischen Fasern verschweißt und die Überschußlänge um die Hülse herumwickelt,

h) das Umsassungsrohr über den Mittelabschnitt bringt und an den beiden Verankerungskörpern anschraubt,

i) die Verschlüsse (13, 13') mit thermoplastischen Material, welche die Verbindung mit der Isolierhülle des Kabels herstellen, gießt, nachdem das Innere des Umfassungsrohres mit einem viskosen Produkt ausgefüllt und eine Einfüllöffnung (20) sowie eine Entlüftungsöffnung (21), welche beide durch die Verankerungskörper gebohrt sind, mittels Stopfen verschlossen wurden.

12. Verfahren nach Anspruch 11 zur Herstellung einer Verbindungsvorrichtung, dadurch gekennzeichnet, daß das viskose Produkt Polyisobutylen ist.

13. Herstellungsverfahren nach einem der Ansprüche 11 oder 12, dadurch gekennzeichnet, daß die Stopfen mit Gewinde versehen sind.

14. Herstellungsverfahren nach einem der Ansprüche 11 bis 13, wobei jedes Kabel einen Rückleiter besitzt, dadurch gekennzeichnet, daß die Rückleiter (14, 14') durch ein Litzenband (15) verbunden werden.

15. Herstellungsverfahren nach Anspruch 14, wobei der Rückleiter mit einer Schutzhülle versehen ist, dadurch gekennzeichnet, daß die beiden Schutzhüllen (16, 16') durch eine schrumpffähige Hülse (17) verbunden werden.

16. Herstellungsverfahren nach einem der Ansprüche 11 bis 15, dadurch gekennzeichnet, daß die gesamte Vorrichtung durch zwei äußere Manschetten (18, 18') aus synthetischem Material bedeckt wird.

**Claims**

1. A device for joining the ends of two underwater optical fibre cables, each cable comprising an optical core (1, 1') around which an arch of helical steel wires (2, 2') is wound, a copper tube (3, 3') swaged down on the arch, an insulating outer sheath (4, 4'), the device comprising two lateral portions, each of which comprises:

an anchor member (8, 8') made at least partially from high mechanical strength metal pierced in the direction of the central portion by a conical bore (9, 9') for passing and accommodating the ends of the steel wires forming the arch, and, at the opposite end, by a cylindrical bore (10, 10') for accommodating the copper tube, and being threaded over a part of its outer surface so as to fix itself in the threads of an end of a containment tube (6);

a conical ring (11, 11') for spreading and retaining the arch forming steel wires pierced by an axial channel for passing the optical core;

a hardenable synthetic resin (12, 12') filling the free space between the inner surface of the anchor member and the outer surface of the conical ring, around the arch-forming steel wire ends, characterized in that the central portion comprises:

a hollow mandrel (5) having lateral openings (25) for the passage of the optical fibres from the inside of the mandrel to the outside, around which are wound the ends of the optical fibres individually welded or connected to one another, said mandrel being blocked against axial displacement as well as rotation about the main axis of the device;

a containment tube (6) made of a metal with high mechanical strength and previously covered by a sheath (7) of insulating thermoplastic material, the tube surrounding the mandrel (5) with play and being screwed with its two ends onto the anchor members, and that there is provided, at each lateral portion:

a closure casting (13, 13') of thermoplastic material ensuring the connection between the insulating sheath (4, 4') of the cable and the insulating sheath of the tube (7).

2. A device according to claim 1, characterized in that the mandrel is blocked against displacement in the direction of the main axis by two anchor members (8, 8').

3. A device according to claim 1, characterized in that the mandrel is blocked against rotation by means of a peg (19).

4. A device according to claim 1, characterized in that the mandrel and the free space between the mandrel and the containment tube are filled with a viscous material such as polyisobutylene.

5. A device according to claim 4, characterized in that the anchor members are provided with openings allowing to fill in the polyisobutylene, one of the members (8) being provided with an opening (20) for injecting the polyisobutylene and the other member (8') being provided with an opening for venting air.

6. A device according to claim 1, characterized in that the conical spreading ring (11, 11') presents a biconical shape for ensuring a better clamping effect.

7. A device according to claim 6, characterized in that a copper ring (27), placed behind the conical ring of biconical shape, constricts the steel wire arch (2) onto the optical core (1).

8. A device according to claim 1, in which each cable comprises a return conductor, characterized in that the device comprises an aluminium braid (15) ensuring the interconnection of the return conductors (14, 14').

9. A device according to claim 1, in which each cable comprises a return conductor covered by a protection sheath, characterized in that the device comprises a thermo-shrinkable sleeve (17) ensuring the junction of the protection sheaths (16, 16').

10. A device according to claim 1, characterized in that it comprises two outer sleeves (18, 18') of synthetic material.

11. A method of manufacturing a junction device according to claim 1, which consists in:

a) eliminating, within the junction zone over a length which is considerably greater than the one required for said device, the optical core (1, 1'), the arch-forming steel wires (2, 2'), the swaged copper tube (3, 3'), the external sheath (4, 4') leaving the optical fibres (22) bare;

b) engaging outer sleeves (18, 18') and the anchor members (8, 8') pierced with a conical bore (9, 9') consecutively on the ends of the cable;

c) cutting the arch-forming steel wires (2, 2'), the swaged copper tube (3, 3'), the outer sheat (4, 4') to the length required by the device;

d) inserting into the conical bore (9, 9') of the anchore members a certain quantity of hardening resin and spreading the ends of the arch-forming steel wires out inside said conical portion,

e) inserting the conical spreading members for the arch-forming steel wires into the anchor members, filling (12) the entire volume between the anchor members, the steeel wire ends and the conical spreading members with synthetic resin, then hardening the resin, characterized in that, after having inserted the containment tube (6) together with the outer sheat and the anchor members,

f) the optical fibres to be welded are passed through a hollow mandrel (5) and its lateral openings (25) and the mandrel is put in place between the anchor members blocking said mandrel against rotation and axial displacement about the main axis,

g) the optical fibres to be connected are welded and the slack is wound around the mandrel,

h) the containment tube is placed about the central portion and screwed to the two anchor members,

i) after having filled the inside of the containment tube with a viscous product and after having closed by plugs the injection opening (20) and an air venting opening (21) pierced into the anchor members (8, 8')s, two closure castings (13, 13') with thermoplastic material are carried out which ensure the junction with the insulating sheath of the cable.

12. A method of manufacturing a junction device according to claim 11, characterized in that the viscous material used is polyisobutylene.

13. A method of manufacturing a junction device according to claim 11 or 12, characterized in that the plugs are threaded plugs.

14. A method of manufacturing a junction device according to any one of claims 11 through 13, in which each cable comprises a return conductor, characterized in that the return conductors (14, 14') are interconnected by a braid (15).

15. A method of manufacturing a junction device according to claim 14, in which the return conductor is covered with a protection sheat, characterized in that the two protection sheaths (16, 16') are connected by means of a shrinkable sleeve (17).

16. A method of manufacturing a junction device according to any one of claims 11 through 15, characterized in that the assembly is covered with two outer sleeves (18, 18') of synthetic material.

FIG.1

FIG.2

FIG.3

EP 0 083 101 B1

FIG.3A

FIG.3B

EP 0 083 101 B1

# FIG.4